# EUROPEAN PATENT SPECIFICATION

(11) **EP 1 773 692 B1**
(45) Date of publication and mention of the grant of the patent: **26.05.2010**
(21) Application number: 05769093.5
(22) Date of filing: 26.07.2005
(51) Int. Cl.: B65D 85/60, B65D 75/10, B65D 75/16, B65D 75/58, B65B 25/00

(54) **LOLLIPOP AND DEVICE FOR THE MANUFACTURING THEREOF.**
LUTSCHER UND HERSTELLUNGSVORRICHTUNG DAFÜR
SUCETTE ET DISPOSITIF DE FABRICATION

(30) Priority: 26.07.2004 NL 1026721; 17.02.2005 NL 1028314
(43) Date of publication of application: 18.04.2007
(73) Proprietor: CFS Weert B.V., 6006 RV Weert (NL)
(72) Inventor: NEIJNENS, Henricus, Petrus, Maria, NL-6081 HA Haelen (NL)
(74) Representative: Wolff, Felix
(86) International application number: PCT/NL2005/000547
(87) International publication number: WO 2006/011793

(56) References cited:
- EP-A- 0 018 701
- EP-A- 1 080 877
- EP-A- 1 188 672
- WO-A-03/106267
- GB-A- 684 363
- GB-A- 1 062 155
- US-A- 5 241 807
- US-A- 5 935 686
- US-B1- 6 374 583

## Description

The invention relates to a lollipop, particularly so-called (double-) twist wrap lollipops. The invention furthermore relates to a method for making such lollipops.

From GB 684363 it is known to wrap sweets in a foil sheet.

It is also known to package lollipops in a foil sheet that is placed around the lollipop head and then twisted around the stick and sealed at that location. Such packagings can also be made with a twisted end at the side of the lollipop head that faces away from the stick, which results in a so-called double-twist wrap lollipop.

In case of the known double-twist wrap lollipops a sheet is folded around the head, in order to form a sleeve that is parallel to the stick. The longitudinal edges are brought into overlap with each other, after which the protruding ends of the sleeve are twisted.

An objection to this known packaging is that the overlap forms a passage for air and moisture towards the lollipop material, particularly the sugary mass of the lollipop head. In this way the quality of the lollipop head is affected, resulting in the lollipops being perishable in certain areas in the world.

it is an object of the invention to improve on this.

It is a further object of the invention to provide a lollipop that is easy to open, despite a sealed packaging.

From one aspect the invention provides a lollipop according to claim 1

In the lollipop according to the invention the head has been sealed from the ambience by the seal seam(s) and the at least one twisted area. In this way the quality, texture and taste of the lollipop mass is preserved. Due to the integrity of the packaging when the seal seam has been formed the lollipop head can, if necessary, be engaged for enhancing the twisting, without an opening in the packaging being created.

Preferably the seal seam extends between both ends, so that thd seal seam is in one plane with the stick.

The seal seam may extend over the full distance between both ends, which results in an optimal sealing. The exact location (considered in stick direction) of the twisted area(s) is of less importance in that case.

The seal seam forms a strip that can be engaged on both sides by the fingers of a hand, which may enhance the opening of the packaging. Opening is further enhanced since the seal seam is provided with a local discontinuity or weakening, where tearing the packaging open can be initiated. The twisted areas need not be touched in that case.

In one embodiment the sheet is made of synthetic material, such as polypropylene, having a layer of sealable material. Said layer preferably is sealable, such as by heat and/or pressure (such as for instance a cold seal).

In one embodiment the sheet is twisted and sealed at both opposite ends, in order to form a so-called twist-wrap lollipop.

In one embodiment the packaging sheet is sealed at the location of the transition from the head to the stick. Preferably the packaging sheet is then twisted at the location of the transition from the head to the stick.

Preferably the packaging sheet is twisted at the longitudinal end facing away from the stick.

From a further aspect the invention provides a method for packaging a lollipop in a sheet of packaging material, such as a foil sheet, wherein the packaging sheet is placed around the lollipop in order to form a sleeve parallel to the stick, wherein the longitudinal edges of the sleeve are sealed together and at least one of the sections of the sleeve protruding towards the opposite sides of the head is twisted and both protruding sections are sealed.

Preferably prior to sealing the longitudinal edges are placed with their inner surfaces against each other.

Alternatively prior to sealing the longitudinal edges are placed with their inner surfaces and outer surfaces, respectively, against each other. The foil can then be provided with a sealable layer at the outer surface or at the inner surface.

Preferably the sealed longitudinal edges form a strip, which strip is laid against the sleeve.

The longitudinal edges and/or twisted areas can be sealed by hot air.

As indicated above the sealed longitudinal edges can be - or are - provided with a discontinuity or weakening.

The invention will be elucidated on the basis of an exemplary embodiment shown in the attached drawings, in which:
Figure 1 shows a double-twist wrap lollipop according to the state of the art, at a moment during manufacturing;
Figure 2 shows a double-twist wrap lollipop according to the invention at the same stage as figure 1;
Figure 3 shows the double-twrist wrap lollipop of figure 2 at a next stage;
Figure 4A shows a double-twist wrap lollipop according to the invention, ready:
Figure 4B shows an alternative embodiment of a lollipop according to the invention;
Figure 5 shows a schematic view in perspective of a part of a packaging device for making lollipops according to figures 2-4A;
Figures 5A and 5B show a schematic view of a transfer station in the device of figure 5;
Figures 6A and 6B show a schematic view, transverse to the lollipop stick and in its extension, respectively, at a first packaging stage;
Figures 7A and 7B show a schematic view, transverse to the lollipop stick and in its extension, respectively, at a second packaging stage;
Figures 8A and 8B show a schematic view, transverse to the lollipop stick and in its extension, respectively, at a third packaging stage;
Figures 8C, 8D and 8E show an end view and side view of a sealing arm and a detail of the sealing surface of said sealing arm, respectively, in the packaging device of figure 5;
Figures 9A and 9B show a schematic view, transverse to the lollipop stick and in its extension, respectively, at a fourth packaging stage; and
Figures 10A and 10B show a schematic view, transverse to the lollipop stick and in its extension, respectively, at a fifth packaging stage.

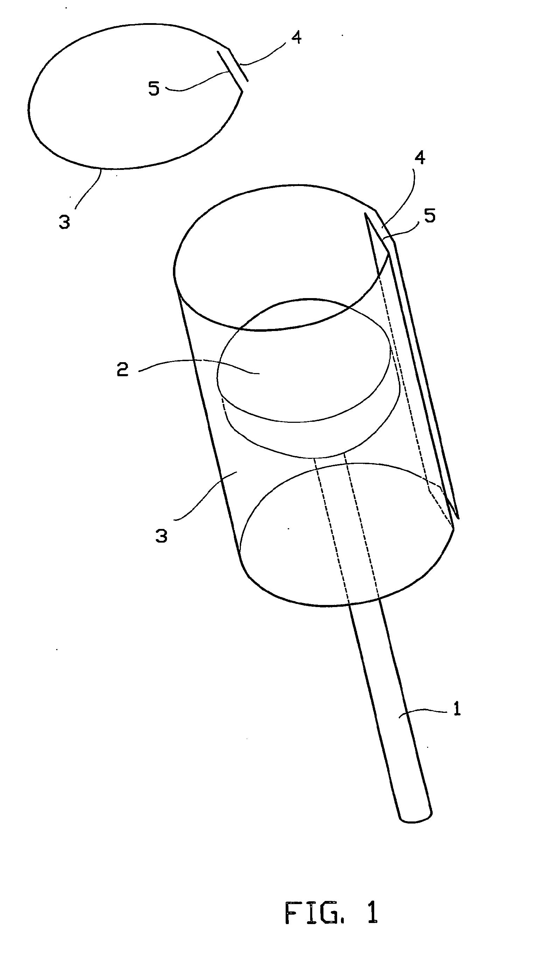

The lollipop shown in figure 1 comprises a stick 1 and a lollipop head 2, which, at a packaging stage, are enveloped by a foil sheet 3, of which, as shown at the top section of figure 1, the edges 4 and 5 have been placed over each other for forming a sleeve, which further down the process is twisted above the head 2 and below the head 2 around the stick 1. The edges 4 and 5 that overlap each other may shift with respect to each other. After the packaging has been completed a passage may have been formed between the edges 4 and 5 through which air and moisture may get to the lollipop head 2, which adversely affects the quality of the lollipop.

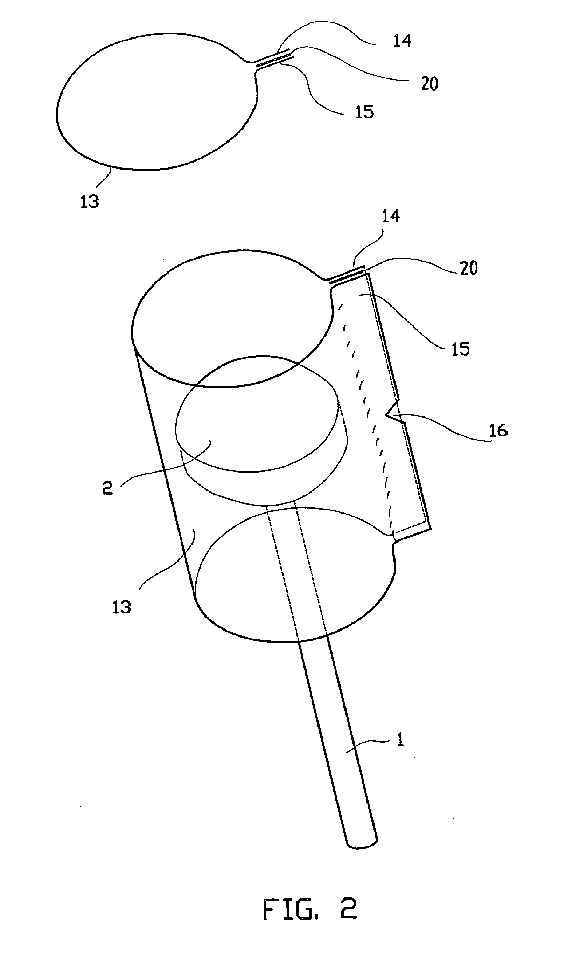

In one suggestion according to the invention, shown in figures 2-4, the foil sheet 13, for instance made of polypropylene provided with a heat sealable layer, is transformed into an actual sleeve, without slit, wherein the edges 14 and 15 under the influence of heat, for instance by hot blow air, are sealed into an airtight and moisture proof seal edge 20. The seal edge 20 may be provided with a weakened area, particularly a notch 16, for initiating a tearing opening movement of the enveloping of the lollipop.

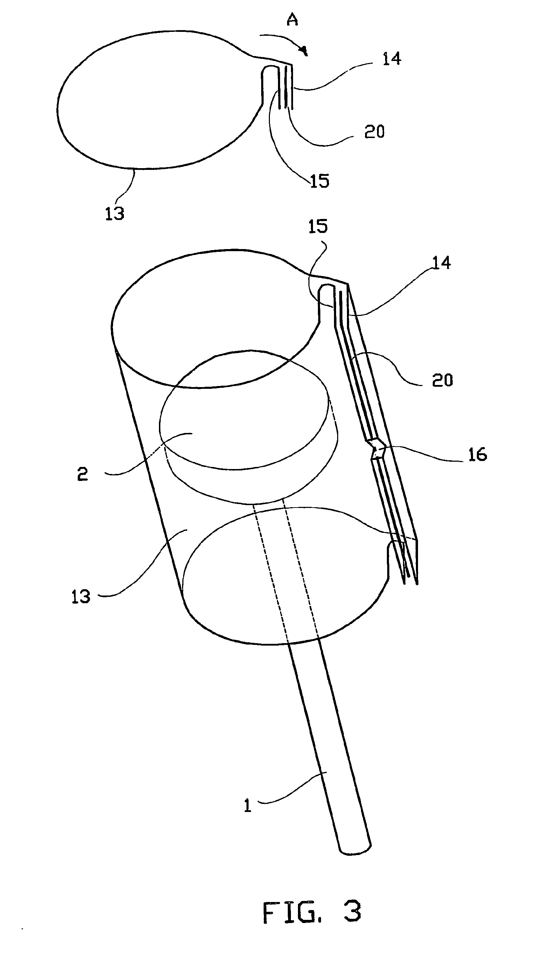

As can be seen in figure 3 the seal edge 20 is subsequently folded to lie flat against the sleeve-shaped packaging formed by sheet 13.

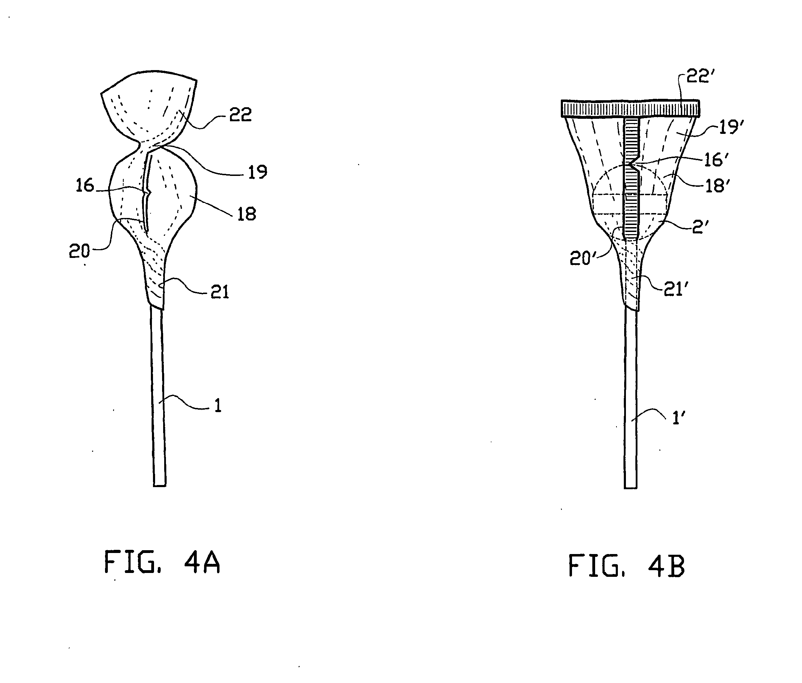

In the condition of figure 3 the foil sleeve closed in circumferential direction can be twisted at both longitudinal ends of the lollipop head 2 in the manner known per se, and be sealed as well, again for instance using hot blow air. Thus the sealed twisted areas 19 and 21 are formed (figure 4A), wherein at the free end a wing 22 is integrally formed. The head 2 is then enveloped by foil section 18, wherein the flat, turned seal edge 20 is accessible to a finger of the user, who is able to lift said edge, subsequently tear it open at the location of weakening 16 to subsequently take the lollipop out of the packaging.

The weakening or discontinuity may under certain circumstances also be formed by a tearing strip.

The lollipop according to figure 4A with the discussed packaging may preserve its quality for a long time, also in areas where with the packagings that have been common up until now the quality of the lollipops deteriorates very quickly.

The same applies to the lollipop shown in figure 4B, in which only one end section of the foil sleeve has been twisted. The head 2' is enveloped by foil section 18', and provided with longitudinal seal 20' with weakening 16'. Below the head 2' the foil tube is twisted (21'), yet above the head 2' the foil tube is untwisted in fan-shaped, flat flaring section 19', yet transversely sealed at the location of seam 22'.

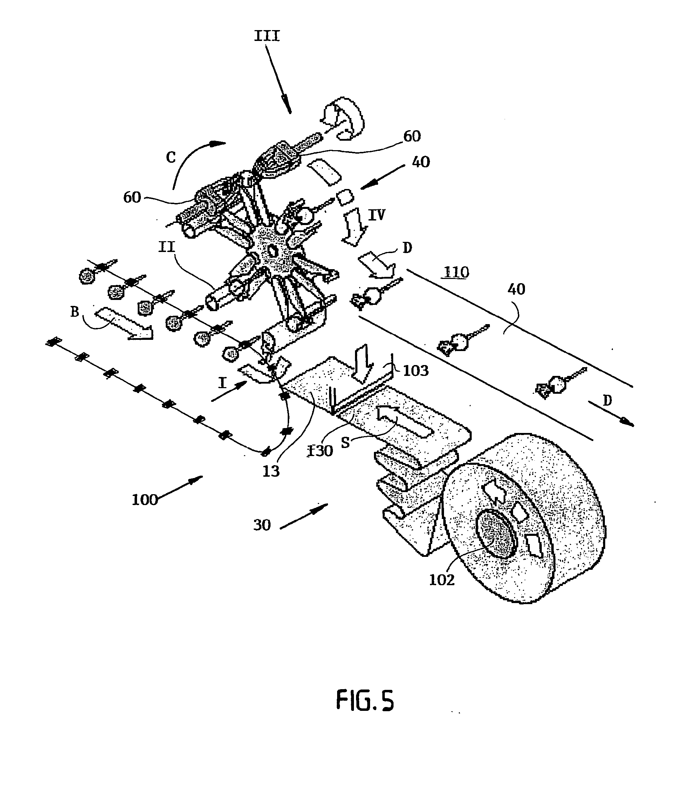

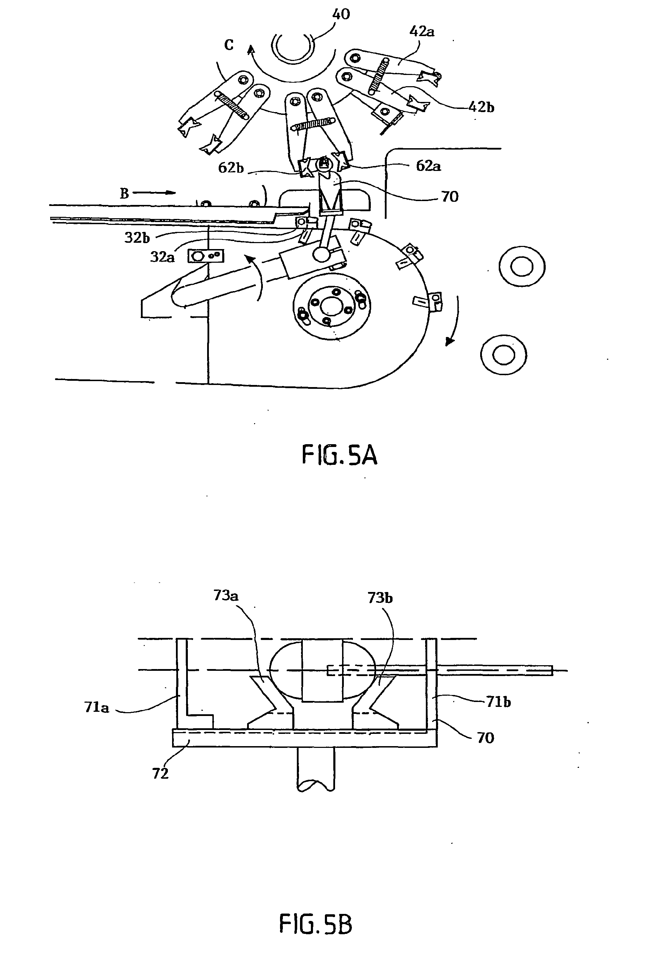

The (part of) packaging device 100 shown in figure 5 comprises a schematically shown supply device 30 for a web of packaging foil 130, which is unrolled from a supply roll 102 and driven in the direction S and cut into pieces of foil sheet 13 by means of blades 103. The cut off foil sheets 13 are intermittently discharged to a series of lollipops supplied in direction B in conveyance clamps 32a,b, as known per se from the applicant's commercially available machine TwistWrapper 300. Each lollipop including a foil sheet 13 is consecutively received in a wheel 40, driven in the direction C about a horizontal centre line. The transfer is schematically shown in figures 5A and 5B. Transfer device 70 moving up and down, takes the lollipops from the conveyance clamps 32a,b opened at that location wherein the lollipop head is supported on support members 73a,b and the stick on support member 71 b, which support members with the member 71 a are attached to support plate 72 of the transfer device 70. Between the support members 73a,b there is room for engagement of the head by clamping members 62a,b that are attached to wheel 40.

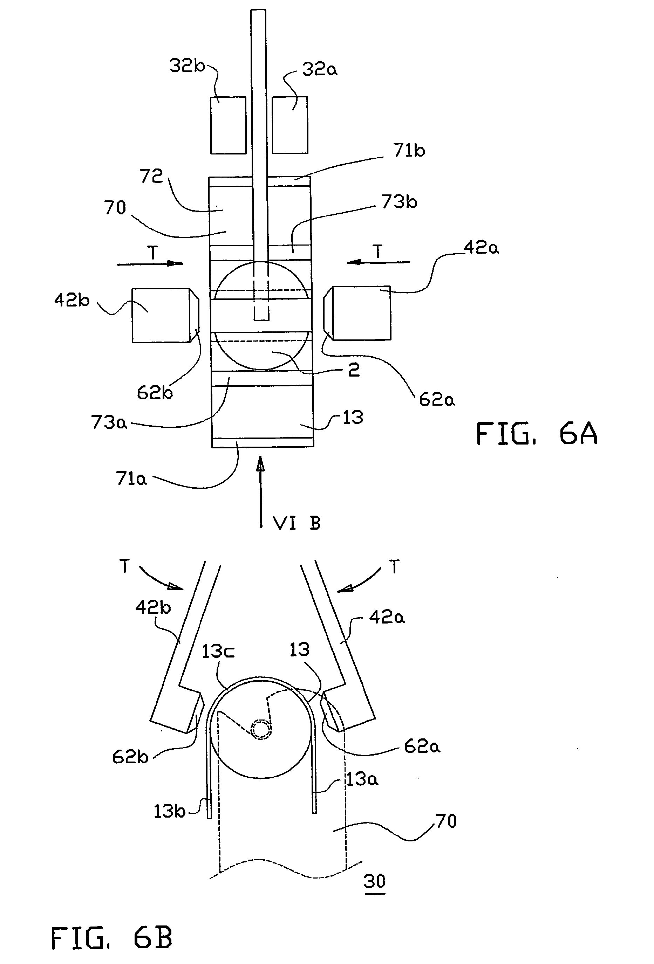

As is also schematically shown in figure 6B the lollipops in supply B are held clamped on the sticks by pairs of clamping jaws 32a, 32b. The second wheel 40 is provided with a series of lollipop holders 60, that circulate along with the second wheel 40 in the direction C.

In the second wheel 40 a number of stations can be distinguished in the circulation, namely station I, where the lollipops including foil sheets are accommodated, station or track II where the foil sheet 13 is placed around the lollipop head and sealed longitudinally, station III where twisting takes place and station IV where the packaged and twisted lollipop is discharged in the direction D to a discharge station 110.

The lollipop holders 60 arranged on the disc 40 have a number of lollipop head clamping arms 42a, 42b, provided with clamping members 62a,b and furthermore hingingly driven (in a manner not shown) in the wheel 40, in order to be brought in and out of clamping engagement of the head of a lollipop.

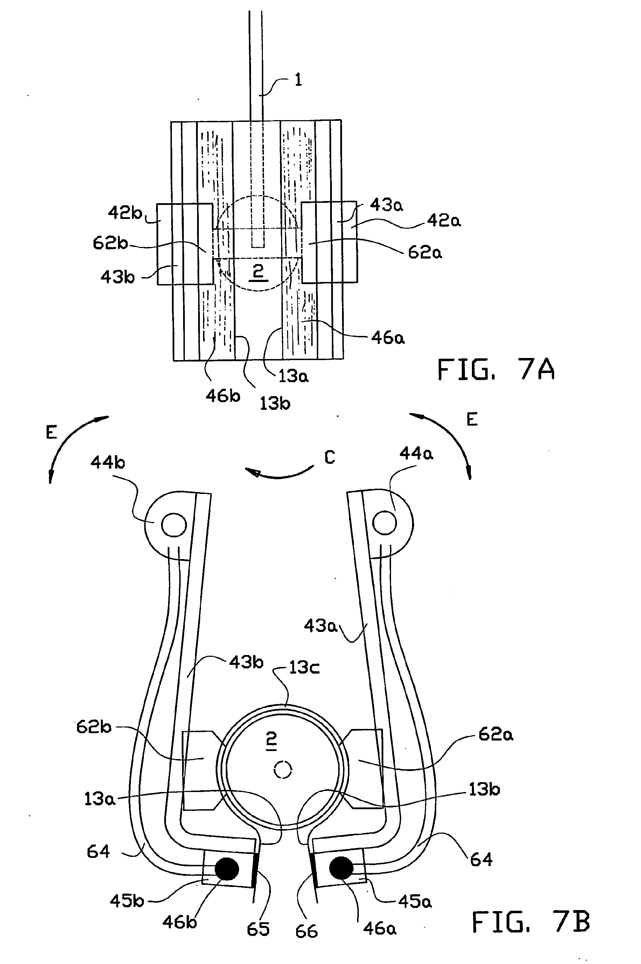

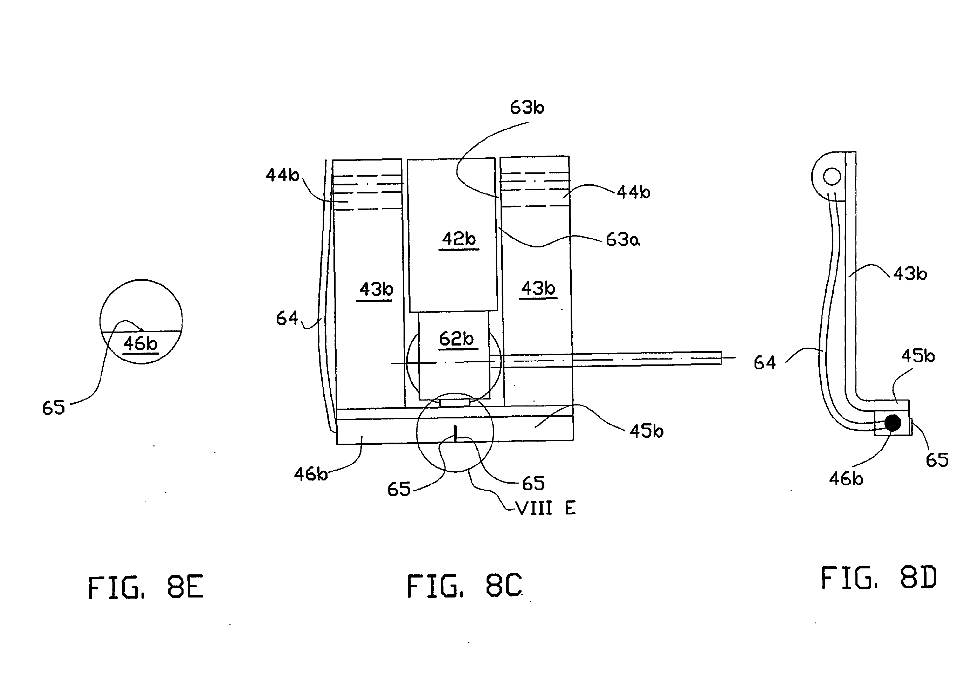

The lollipop holders 60 furthermore comprise sealing arms 43a, 43b, which, as can be seen in figure 7B, are hingingly attached on the second wheel 40 at the location of hinges 44a, 44b, and are L-shaped with sealing rods 45a, 45b, in which heating elements 46a, 46b have been arranged. On sealing rod 45b (see figure 8E) a blade 65 has been provided that is able to cuttingly cooperate with an anvil 66 on sealing rod 46a. The blade 65 does not extend over the full height of the sealing rod 46a, but ends at a distance from the edge of the sealing rod that is situated at the lollipop side. As is also indicated in figure 8D a heating wire 64 extends to heating element 46b for actuating it. The wire 64 extends to hinge 44b, in order to be connected there to further electric wires that are not further shown.

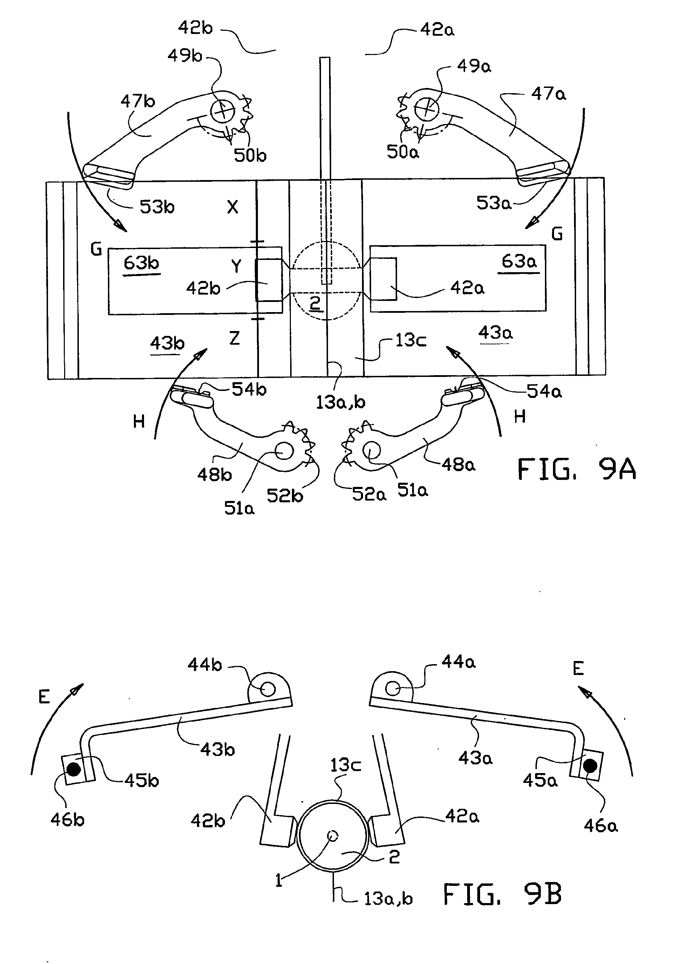

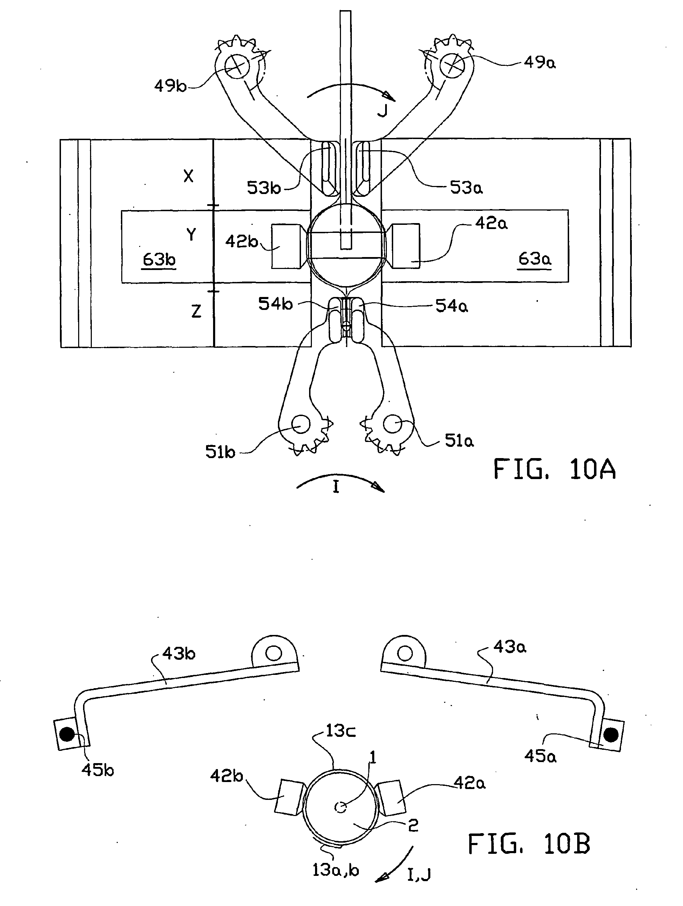

As further shown in figures 9A and 10A two pairs of twisting arms 47a, 47b and 48a, 48b are positioned at the location of station III, which arms are rotatably attached in manner that is not shown at the location of hinges 49a, 49b and 51 a, 51 b in order to be rotated in the directions G and H. The twisting arms 47a, 47b and 48a, 48b are provided with teeth 50a, 50b and 52a, 52b near their hinge end for cooperation with a drive rack (not further shown) in order to be able to carry out the said rotation.

At their other ends the twisting arms 47a, 47b and 48a, 48b are provided with foil engagement surfaces 53a, 53b and 54a, 54b. The twisting arms 47a, 47b are provided with an opening 63a,b to offer room to the sealing arms 43a, 43b, also see figure 8C.

In the partial track I the treatment shown in figures 6A and 6B takes place. The stick of the lollipop is still clamped by the clamping arms 32a, 32b of the supplier. The clamping arms 42a, 42b of the second wheel 60 rotate inwards, and with the clamping members 62a,b start clamping the lollipop on the head, with the foil sheet 13 in between. Then the clamping arms 32a, 32b of the supplier are released. The lollipop is then only held on the wheel 40.

Immediately subsequent, while rotating in direction C, in partial track II, the sealing arms 43a, 43b are rotated towards each other in the direction E. The sealing rods 45a, 45b with the heating elements 46a, 46b contact the pending foil sheet areas 13a, 13b and bring them towards each other, as can be seen in figure 7B.

This movement is continued until the foil sheet areas 13a, 13b touch each other and the sealing rods 45a, 45b of the sealing arms 43a, 43b extend just below the head 2 of the lollipop. The sealing arms 43a, 43b here also function as (part of the) means for placing the foil sheet fully around the lollipop.

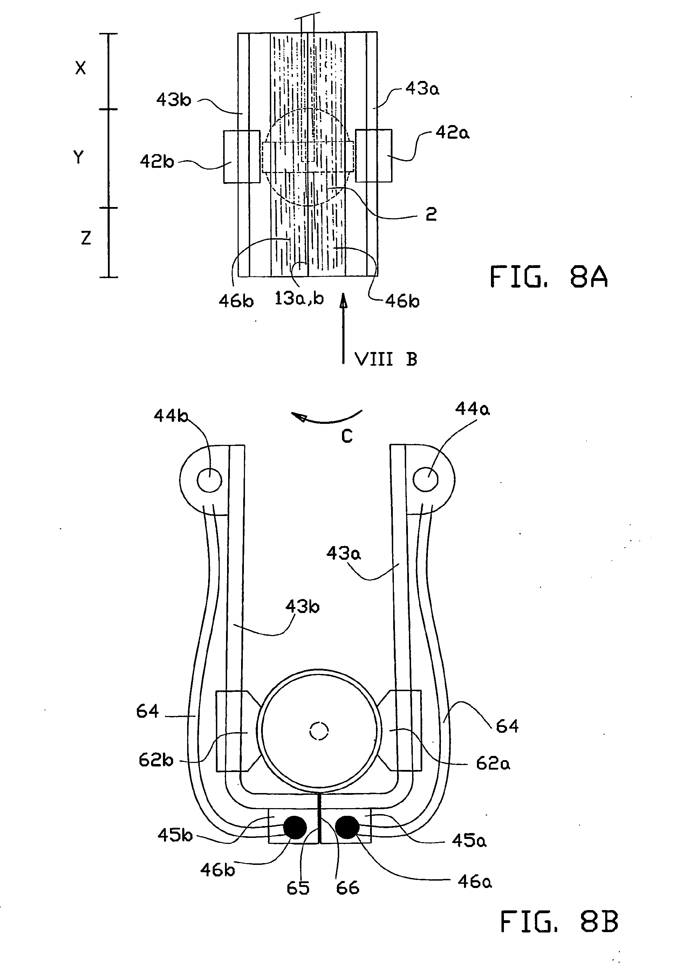

In addition or subsequently the heating elements 46a, 46b are activated and the foil areas 13a, 13b are sealed together, see figure 8B.

Then a foil tube 13 closed by sealing is achieved, which fully surrounds the lollipop head 2 in partial area Y (see figures 8A, 9A), and protruding therefrom in longitudinal direction of the tube in foil tube edge areas X and Z.

Subsequently the sealing arms 43a, 43b can be moved apart in the direction E (see figure 9B), and the lollipop holders 60 arrive at twisting station III. At that location the wheel 40 is held still and the twisting arms 47a, 47b and 48a, 48b are rotated in the direction G and H in order to fixedly clamp the respective foil tube sections X and Z between the twisting surfaces 53a, 53b and 54a, 54b. The stick, however, remains clamped at all times between the clamping arms 42a, 42b, on the head, including the foil.

Subsequently the twisting arms 47a,b and 48a,b are rotated in the directions I and J, as schematically shown in figure 10A, about a centre line coinciding with the centre line of the stick. The clamping arms 42a, 42b here do not rotate any longer, so that the foil tube 13 is rotated, wherein the foil tube section X is twisted around the stick and the foil tube section Z is twisted into a fan-shaped knot. During twisting the twisting arms 47a,b and 48a,b will be moved slightly towards the lollipop head in the manner known per se (TwistWrapper 300).

Because of the twisted ends and the sealing seal continuing therein the lollipop head 2 will be fully closed off from the ambience.

After the twisting arms 47a, 47b and 48a, 48b have been removed from the lollipop including foil and have at least been slightly rotated back again the wheel 40 is rotated further and the packaged lollipop is discharged in station IV in direction D to a discharge station 110, after the clamping arms 42a, 42b have been opened.

## Claims

1. Lollipop having a head (2, 2') and a stick (1,1'), wherein the lollipop head (2, 2') is packaged in a packaging sheet (3, 13), such as a foil sheet (3, 13), wherein the packaging sheet (3, 13) forms a seal seam with edges (4, 14, 5, 15) that are joined together, **characterised in that** the sheet (3, 13) is sealed on both sides of the head (2, 2'), considered in longitudinal direction, and is twisted at least one of the longitudinal ends, wherein a seal seam extends over the full distance between both ends and the seal seam forms a strip that can be engaged on both sides by the fingers of a hand and is provided with a notch (16).

2. Lollipop according to claim 1, **characterised in that** the sheet (3, 13) is made of synthetic material, such as polypropylene, having a layer of sealable material.

3. Lollipop according to claim 2, **characterised in that** the layer is sealable, such as by heat or pressure, particular cold seal.

4. Lollipop according to any one of the preceding claims, **characterised in that** the packaging sheet (3, 13) is sealed at the location of the transition from the head (2) to the stick (1).

5. Lollipop according to claim 4, **characterised in that** the packaging sheet (3, 13) is twisted at the location of the transition from the head (2, 2') to the stick (1, 1') of the head (2, 2').

6. Lollipop according to any one of the preceding claims, **characterised in that** the packaging sheet (3, 13) is twisted at the longitudinal end facing away from the stick (1, 1').

7. Method for packaging a lollipop in a sheet (3, 13) of packaging material, wherein the packaging sheet (3, 13) is wrapped around the lollipop in order to form a sleeve parallel to the stick (1, 1'), **characterised in that** the longitudinal edges (4, 14, 5, 15) of the sleeve are sealed together, wherein the sealed longitudinal edges (4, 14, 5, 15) form a strip, which strip is laid against the sleeve and at least one of the sections of the sleeve protruding towards the opposite sides of the head (2, 2') is twisted and both protruding sections are sealed.

8. Method according to claim 7, **characterised in that** prior to sealing the longitudinal edges (4, 14, 5, 15) are placed with their inner surfaces against each other.

9. Method according to claim 7, **characterised in that** prior to sealing the longitudinal edges (4, 14, 5, 15) are placed with their inner surfaces and outer surfaces, respectively, against each other.

10. Method according to any one of the claims 7-9, **characterised in that** the longitudinal edges (4, 14, 5, 15) are sealed by hot air.

11. Method according to any one of the claims 7-10, **characterised in that** the twisted areas are sealed by hot air.

12. Method according to any one of the claims 7-11, **characterised in that** the sealed longitudinal edges (4, 14, 5, 15) are provided with a discontinuity or weakening (16).

## Patentansprüche

1. Lutscher mit einem Kopf (2, 2') und einem Stiel (1, 1'), wobei der Lutscherkopf (2, 2') in einem Verpackungsbogen (3, 13) wie einem Folienbogen (3, 13) verpackt ist, wobei der Verpackungsbogen (3, 13) eine Siegelnaht mit miteinander verbundenen Rändern (4, 14, 5, 15) bildet, **dadurch gekennzeichnet, dass** der Bogen (3, 13) in Längsrichtung gesehen auf beiden Seiten des Kopfs (2, 2') gesiegelt und an mindestens einem der Längsenden zusammengedreht ist, wobei sich eine Siegelnaht über die gesamte Strecke zwischen beiden Enden erstreckt und die Siegelnaht einen Streifen bildet, der auf beiden Seiten mit den Fingern einer Hand in Eingriff genommen werden kann und mit einer Kerbe (16) versehen ist.

2. Lutscher nach Anspruch 1, **dadurch gekennzeichnet, dass** der Bogen (3, 13) aus synthetischem Material wie Polypropylen hergestellt ist, das eine Schicht aus siegelbarem Material hat.

3. Lutscher nach Anspruch 2, **dadurch gekennzeichnet, dass** die Schicht siegelbar ist wie beispielsweise mit Wärme oder Druck, besonders durch Kaltsiegelung.

4. Lutscher nach einem der vorhergehenden Ansprüche, **dadurch gekennzeichnet, dass** der Verpackungsbogen (3, 13) an der Stelle des Übergangs vom Kopf (2) zum Stiel (1) gesiegelt wird.

5. Lutscher nach Anspruch 4, **dadurch gekennzeichnet, dass** der Verpackungsbogen (3, 13) an der Stelle des Übergangs vom Kopf (2, 2') zum Stiel (1, 1') des Kopfs (2, 2') zusammengedreht wird.

6. Lutscher nach einem der vorhergehenden Ansprüche, **dadurch gekennzeichnet, dass** der Verpackungsbogen (3, 13) an dem vom Stiel (1, 1') weg weisenden Längsende zusammengedreht wird.

7. Verfahren zum Verpacken eines Lutschers in einem Bogen (3, 13) aus Verpackungsmaterial, wobei der Verpackungsbogen (3, 13) zu einer parallel zum Stiel (1, 1') verlaufenden Hülse um den Lutscher gewickelt wird, **dadurch gekennzeichnet, dass** die Längsränder (4, 14, 5, 15) der Hülse zusammengesiegelt werden, wobei die gesiegelten Längsränder (4, 14, 5, 15) einen Streifen bilden, der an die Hülse gelegt wird, und mindestens einer der Abschnitte der Hülse, die zu den gegenüberliegenden Seiten des Kopfs (2, 2') vorstehen, zusammengedreht wird und beide vorstehenden Abschnitte gesiegelt werden.

8. Verfahren nach Anspruch 7, **dadurch gekennzeichnet, dass** die Innenflächen der Längsränder (4, 14, 5, 15) vor dem Siegeln aneinander gelegt werden.

9. Verfahren nach Anspruch 7, **dadurch gekennzeichnet, dass** die Innenflächen bzw. Außenflächen der Längsränder (4, 14, 5, 15) vor dem Siegeln aneinander gelegt werden.

10. Verfahren nach einem der Ansprüche 7 - 9, **dadurch gekennzeichnet, dass** die Längsränder (4, 14, 5, 15) mit Heißluft gesiegelt werden.

11. Verfahren nach einem der Ansprüche 7 - 10, **dadurch gekennzeichnet, dass** die zusammengedrehten Bereiche mit Heißluft gesiegelt werden.

12. Verfahren nach einem der Ansprüche 7 - 11, **dadurch gekennzeichnet, dass** die gesiegelten Längsränder (4, 14, 5, 15) mit einer Unterbrechung oder Schwächung (16) versehen sind.

## Revendications

1. Sucette comprenant une tête (2, 2') et un bâton (1, 1'), dans laquelle la tête de sucette (2, 2') est emballée dans une feuille d'emballage (3, 13), telle qu'une feuille de film (3, 13), dans laquelle la feuille d'emballage (3, 13) forme une soudure étanche avec les bords (4, 14, 5, 15) qui sont joints les uns aux autres, **caractérisée en ce que** la feuille (3, 13) est scellée sur les deux côtés de la tête (2, 2'), dans la direction longitudinale, et est torsadée à au moins une des extrémités longitudinales, dans laquelle une soudure étanche s'étend sur la totalité de la distance entre les deux extrémités, et la soudure étanche forme une bande qui peut être engagée sur les deux côtés par les doigts d'une main et qui est pourvue d'une encoche (16).

2. Sucette selon la revendication 1, **caractérisée en ce que** la feuille (3, 13) est constituée d'une matière synthétique, telle que le polypropylène, et comporte une couche de matière scellable.

3. Sucette selon la revendication 2, **caractérisée en ce que** la couche est scellable, par application de chaleur ou de pression, en particulier scellable à froid.

4. Sucette selon l'une quelconque des revendications précédentes, **caractérisée en ce que** la feuille d'emballage (3, 13) est scellée à l'endroit de la transition entre la tête (2) et le bâton (1).

5. Sucette selon la revendication 4, **caractérisée en ce que** la feuille d'emballage (3, 13) est torsadée à l'endroit de la transition entre la tête (2, 2') et le bâton (1, 1') de la tête (2, 2').

6. Sucette selon l'une quelconque des revendications précédentes, **caractérisée en ce que** la feuille d'emballage (3, 13) est torsadée à l'extrémité longitudinale qui est opposée au bâton (1, 1').

7. Procédé pour emballer une sucette dans une feuille (3, 13) de matière d'emballage, dans lequel la feuille d'emballage (3, 13) est enroulée autour de la sucette dans le but de former un manchon parallèle au bâton (1, 1'), **caractérisé en ce que** les bords longitudinaux (4, 14, 5, 15) du manchon sont scellés les uns aux autres, dans lequel les bords longitudinaux scellés (4, 14, 5, 15) forment une bande, ladite bande étant posée contre le manchon, et au moins une des sections du manchon qui fait saillie en direction des côtés opposés de la tête (2, 2') est torsadée et les deux sections saillantes sont scellées.

8. Procédé selon la revendication 7, **caractérisé en ce qu'**avant le scellage, les bords longitudinaux (4, 14, 5, 15) sont placés avec leurs surfaces intérieures les unes contre les autres.

9. Procédé selon la revendication 7, **caractérisé en ce qu'**avant le scellage, les bords longitudinaux (4, 14, 5, 15) sont placés avec leurs surfaces intérieures et leurs surfaces extérieures, respectivement, les unes contre les autres.

10. Procédé selon l'une quelconque des revendications 7 à 9, **caractérisé en ce que** les bords longitudinaux (4, 14, 5, 15) sont scellés à l'air chaud.

11. Procédé selon l'une quelconque des revendications 7 à 10, **caractérisé en ce que** les régions torsadées sont scellées à l'air chaud.

12. Procédé selon l'une quelconque des revendications 7 à 11, **caractérisé ce que** les bords longitudinaux scellés (4, 14, 5, 15) sont pourvus d'une discontinuité ou d'un affaiblissement (16)
